# EUROPÄISCHE PATENTSCHRIFT

(11) **EP 1 031 325 B1**
(45) Veröffentlichungstag und Bekanntmachung des Hinweises auf die Patenterteilung: **30.05.2007**
(21) Anmeldenummer: 00103888.4
(22) Anmeldetag: 24.02.2000
(51) Int. Cl.: A61C 3/02

(54) **Dentalwerkzeug**
Dental tool
Outil dentaire

(30) Priorität: 26.02.1999 DE 19908507
(43) Veröffentlichungstag der Anmeldung: 30.08.2000
(73) Patentinhaber: Gebr. Brasseler GmbH & Co. KG, D-32657 Lemgo (DE)
(72) Erfinder: Danger, Karl-Heinz, 32758 Detmold (DE); Küllmer, Michael, 32657 Lemgo (DE)
(74) Vertreter: Hager, Thomas Johannes

(56) Entgegenhaltungen:
- EP-A- 0 379 201
- EP-A- 0 890 403
- BE-A- 903 012
- DE-U- 8 815 578
- DE-U- 9 401 142
- FR-A- 2 415 453
- GB-A- 916 197
- US-A- 2 715 772
- US-A- 4 834 655

## Beschreibung

Die vorliegende Erfindung betrifft ein Dental-Schleifwerkzeug.

Dentalwerkzeuge, insbesondere zum Schleifen von Zähnen, wie sie z. B. aus der gattungsbildenden EP 71 611 B1 bekannt sind, werden im Rahmen der zahnärztlichen Präparationstechnik sowohl zum Vorschleifen (Schruppen) als auch zum Feinschleifen (Schlichten) eingesetzt. Bei diesen Schleifvorgängen hat der Zahnarzt und auch der Patient ein Interesse daran, dass sich dieser Vorgang möglichst schnell vollzieht. In diesem Punkt ergibt sich jedoch ein Interessenkonflikt. Der Zahnarzt hat den Zahn so zu präparieren, dass er anschließend wieder restauriert werden kann. Es soll nicht zu viel Material abgetragen werden. Dabei darf es auch zu keinen vermeidbaren Schädigungen z.B. durch hohe Präparationstemperaturen kommen. Unter diesem Gesichtspunkt ist festzuhalten, dass im Regelfall nur so wenig wie möglich abgetragen werden soll. Eine substanzschonende und -erhaltende Präparation ist gefordert.

Dies gilt jedoch nicht für alle Präparationsarbeiten. So muss der Zahnarzt z.B. bei der Präparation eines Zahnes, der nachfolgend mit einer Krone oder Brücke versehen .werden soll, im Einzelfall relativ viel Material abtragen. Die Instrumente hierfür gibt es in unterschiedlichen Körnungen. Viele Zahnärzte bevorzugen grobe Schleifinstrumente, um möglichst schnell die Reduktion des Zahnschmelzes zu vollziehen. Die bekannten Schleifinstrumente sind jedoch in ihrer Effizienz verbesserungswürdig, d.h. eine schnelle Reduktion des Zahnschmelzes ist sowohl aus der Sicht des Zahnarztes als auch aus der Sicht des Patienten wünschenswert.
Aus der US 4,834,655 ist ein Dental-Schleifwerkzeug zum Schleifen von Zähnen bekannt, welches einen Schleifkopf und einen rotierbaren Schaft aufweist. Der Schleifkopf ist mit einem Schleifbelag in Form von Diamantkörnern ausgebildet, wobei der Schleifbelag durch geometrische Konturen in Form von Nuten unterbrochen ist. Diese Nuten dienen zum Abtransport von Spanmaterial, welches während des Schleifens eines Zahnes abgeschliffen wird.

Es ist Aufgabe der vorliegenden Erfindung ein gattungsgemäßes Dental-Schleifwerkzeug zu schaffen, welches in praxi eine höhere Abtragleistung hinsichtlich einer zu bearbeitenden Oberfläche erzielt.

Die Aufgabe der vorliegenden Erfindung wird durch die Merkmalskombination des Anspruches 1 gelöst. Die Unteransprüche haben bevorzugte Weiterbildungen der Erfindung zum Inhalt.

Weitere Vorteile und Merkmale der vorliegenden Erfindung werden aus der nachfolgenden detaillierten Beschreibung erfindungsgemäßer Ausführungsbeispiele eines Dentalwerkzeuges in Verbindung mit der beigefügten Zeichnung ersichtlich. Es zeigt:
- Fig. 1A: eine schematische Seitenansicht eines ersten Ausführungsbeispiels eines erfindungsgemäßen Dentalwerkzeuges;
- Fig. 1B: eine Querschnittansicht entlang der Linie A-A von Fig. 1A;
- Fig. 2A: eine schematische Seitenansicht eines Ausführungsbeispiel eines Dentalwerkzeuges;
- Fig. 2B: eine Querschnittansicht entlang der Linie A-A von Fig. 2A;
- Fig. 3A: eine schematische Seitenansicht eines Ausführungsbeispiel eines Dentalwerkzeuges;
- Fig. 3B: eine Querschnittansicht entlang der Linie A-A von Fig. 3A;
- Fig. 4A: eine schematische Seitenansicht eines zweiten Ausführungsbeispiel eines erfindungsgemäßen Dentalwerkzeuges;
- Fig. 4B: eine Querschnittansicht entlang der Linie A-A von Fig. 4A;
- Fig. 5A: eine schematische Seitenansicht eines dritten Ausführungsbeispiel eines erfindungsgemäßen Dentalwerkzeuges;
- Fig. 5B: eine Querschnittansicht entlang der Linie A-A von Fig. 5A;
- Fig. 6A: eine schematische Seitenansicht eines Ausführungsbeispiel eines Dentalwerkzeuges;
- Fig. 6B: eine Querschnittansicht entlang der Linie A-A von Fig. 6A;
- Fig. 7A: eine schematische Seitenansicht eines vierten Ausführungsbeispiel eines erfindungsgemäßen Dentalwerkzeuges;
- Fig. 7B: eine Querschnittansicht entlang der Linie A-A von Fig. 7A;
- Fig. 8A: eine schematische Seitenansicht eines fünften Ausführungsbeispiel eines erfindungsgemäßen Dentalwerkzeuges;
- Fig. 8B: eine Querschnittansicht entlang der Linie A-A von Fig. 8A;
- Fig. 9A: eine schematische Seitenansicht eines Ausführungsbeispiel eines Dentalwerkzeuges; und
- Fig. 9B: eine Querschnittansicht entlang der Linie A-A von Fig. 9A.

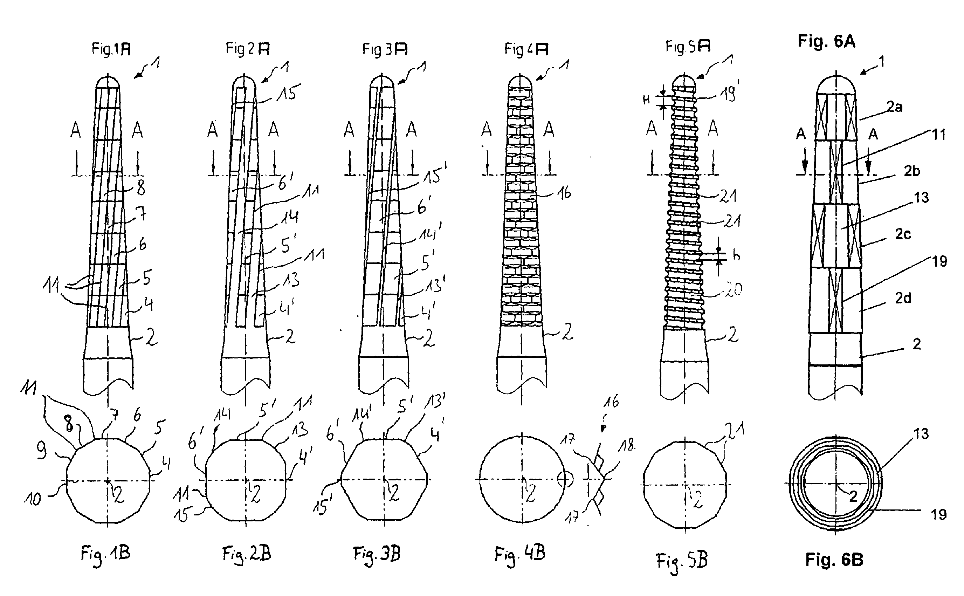

Es wird hiermit angezeigt, dass die Ausführungsbeispiele gemäß den Figuren 2,3,6,9 nicht unter den Gegenstand des Anspruches 1 fallen.

Die Fig. 1A zeigt eine schematische Seitenansicht eines ersten Ausführungsbeispieles eines erfindungsgemäßen Dentalwerkzeuges 1. Das Dentalwerkzeug 1 wird zum Schleifen von Zähnen eingesetzt und umfaßt einen Schleifkopf 2 und einen rotierend antreibbaren Schaft 3. Der Schaft 3 wird hierbei von einer nicht dargestellten Antriebsvorrichtung angetrieben.

Der Schleifkopf 2 ist im Ausführungsbeispiel von Fig. 1A im wesentlichen kegelförmig. Der Schleifkopf kann aber auch zylindrisch oder flammenförmig sein. Des weiteren sind in die Mantelfläche des Schleifkopfes 2 ebene Flächen 4 bis 10 eingearbeitet. Jeweils zwei ebene Flächen grenzen direkt aneinander und bilden an der Verbindungslinie erhabene Bereiche 11, welche bei der Schnittansicht von Fig. 1B als Kanten 11 ausgebildet sind. Mit anderen Worten, die Kanten 11 bilden die Seitenlinien der ebenen Flächen 4 bis 10. In den Fig. 1A und 1B wurden nur drei bzw. zwei Kanten mit dem entsprechenden Bezugszeichen 11 beispielhaft versehen, obgleich in Fig. 1A sechs Kanten 11 und in Fig. 1B zwölf Kanten 11 sichtbar sind.

In Fig. 1A sind die ebenen Flächen 4 bis 10 in sieben Abschnitte unterteilt, jedoch ist diese Unterteilung nicht erforderlich. Und es kann auch eine andere Unterteilungszahl gewählt werden. Dies hängt von den jeweiligen Anforderungen ab.

Die unterteilten Abschnitte sind jeweils mit Diamant-Körnern galvanisch belegt. Gleichzeitig können die unterschiedlichen Abschnitte auch Diamant-Körner unterschiedlicher Korngröße von 5 bis 250um aufweisen. Andererseits können natürlich die unterschiedlichen Abschnitte auch mit Diamant-Körnern gleicher Korngröße besetzt sein. Als besonders effektiv hinsichtlich der Schleifwirkung hat sich eine Korngröße der Diamant-Körner von 100 bis 180µm herausgestellt.

Schließlich ist noch anzumerken, dass beim erfindungsgemäßen Dentalwerkzeug von Fig. 1A die Spitze des Schleifkopfes 2 abgerundet ist, um Verletzungen beim Einsatz des erfindungsgemäßen Dentalwerkzeuges im Mundbereich eines Patienten zu vermeiden.

Im Folgenden wird kurz die Betriebsweise des erfindungsgemäßen Dentalwerkzeuges 1 beschrieben.

Das Dentalwerkzeug 1 wird mit seinem Schaft 3 in eine nicht dargestellte Antriebsvorrichtung gesteckt, welche bei Einsatz des erfindungsgemäßen Dentalwerkzeuges 1 den Schaft 3 einschließlich Schleifkopf 2 rotierend antreibt. Anschließend wird das erfindungsgemäße Dentalwerkzeug 1 mit seinem Schleifkopf 2 an einen Zahn herangeführt. Hierbei treten nur die Kanten 11 mit der Zahnoberfläche in Kontakt. Da der Drallwinkel der Kanten 11 in Fig. 1A ca. 30° beträgt, muss der Schleifkopf 2 sich um 30° drehen, um einen Kontakt einer Kante 11 von deren Anfangspunkt bis zu deren Endpunkt mit einer Zahnoberfläche sicherzustellen.

Somit gelangt eine Kante 11 während einer Momentaufnahme nur punktförmig und nicht über ihre komplette Länge mit einer Zahnoberfläche in Kontakt, so dass bei konstanter Anpresskraft ein höherer Anpressdruck pro Angriffsfläche resultiert. Dennoch wird jedoch eine Zahnoberfläche. über die komplette Höhe des Schleifkopfes 2 durch eine Kante 11 bearbeitet, jedoch mit einer von der Rotationsgeschwindigkeit des Dentalwerkzeuges 1 abhängigen Zeitverzögerung.

In den Fig. 2A, 2B, 3A und 3B sind zwei weitere, dem ersten Ausführungsbeispiel ähnliche Ausführungsbeispiele dargestellt. Diese beiden Ausführungsbeispiele unterscheiden sich vom ersten Ausführungsbeispiel dadurch, dass zwischen zwei benachbarten ebenen Flächen 4', 5', 6' jeweils ein der Kegelform entstammender gewölbter Bereich 13, 14, 15 bzw. 13', 14′, 15′ verblieben ist.

Andererseits weisen auch diese beiden Ausführungsbeispiele Kanten 11 auf, die jedoch in Abhängigkeit von der Bogenlänge des jeweiligen gewölbten Bereiches 13, 14, 15 bzw. 13', 14', 15' in geringerer Anzahl (Fig. 2B) oder höherer Anzahl (Fig. 3B) vorgesehen sind.

In Fig. 4A ist ein zweites Ausführungsbeispiel des erfindungsgemäßen Dentalwerkzeuges 1 in schematischer Seitenansicht dargestellt. Dieses Ausführungsbeispiel unterscheidet sich von den vorhergehenden Ausführungsbeispielen dadurch, dass der Schleifkopf 2 auf seiner Oberfläche mit einer wabenförmigen Struktur 16 ausgebildet ist. Hierbei ist, wie insbesondere Fig. 4B zeigt, die wabenförmige äußere Struktur 16 mit erhabenen Bereichen 18 sowie abgesenkten Bereichen 17 ausgebildet. Dies ist aus Fig. 4B und dem mittels eines Kreises gekennzeichneten vergrößerten Ausschnittes erkennbar.

Beispielhaft ist auch in Fig. 4A eine Abfolge von erhabenen Bereichen 18 und abgesenkten Bereichen 17 dargestellt. Jedoch kann die Abfolge auch konträr verlaufen, d.h. die erhabenen Bereiche können abgesenkte Bereiche und die abgesenkten Bereiche erhabene Bereiche darstellen. Dies ist aber zur Verdeutlichung des Grundprinzips der vorliegenden Erfindung, nämlich pro Umdrehung des Schleifkopfes 2 einen sogenannten nachlaufenden Abtrag zu erzielen, unwesentlich.

Die Fig. 5 zeigt ein drittes Ausführungsbeispiel des erfindungsgemäßen Dentalwerkzeuges. In der seitlichen Ansicht des erfindungsgemäßen Dentalwerkzeuges 1 von Fig. 5A ist der erhabene Bereich 19' über die Höhe des Schleifkopfes 2 spiral- bzw. gewindeförmig ausgebildet. Hierbei entspricht die Steigung eines Gewindeumlaufes der Höhe h der spiralförmigen Nut 20'. Bei Rotation des erfindungsgemäßen Dentalwerkzeuges 1 greifen pro Momentaufnahme punktförmige Abschnitte des erhabenen Bereiches 19' an einer Zahnoberfläche ein. Diese punktförmigen Abschnitte verschieben sich mit fortgesetzter Rotation in Fig. 5A nach unten, so daß pro Umdrehung des Schleifkopfes 2 die Höhe H pro Windung des erhabenen Bereiches 19' am zu bearbeitenden Zahnschmelz in nachlaufender Form abgetragen wird. Wie Fig. 5B zeigt, ist die Oberfläche des erhabenen Bereiches mit einer Vielzahl von aneinander grenzenden ebenen Flächen 21 ausgebildet, so dass sich im Schnitt von Fig. 5B eine 12-eckige Fläche ergibt. Die an zwei aneinander grenzenden ebenen Flächen 12 des erhabenen Bereiches 19' gebildeten Kanten 11 erhöhen weiterhin die Effizienz des erfindungsgemäßen Dentalwerkzeuges 1.

Es ist ersichtlich, dass je nach den Anforderungen die Eckenzahl des Schnittes von Fig. 5B veränderbar ist, d.h. die Eckenzahl erhöht oder vermindert werden kann.

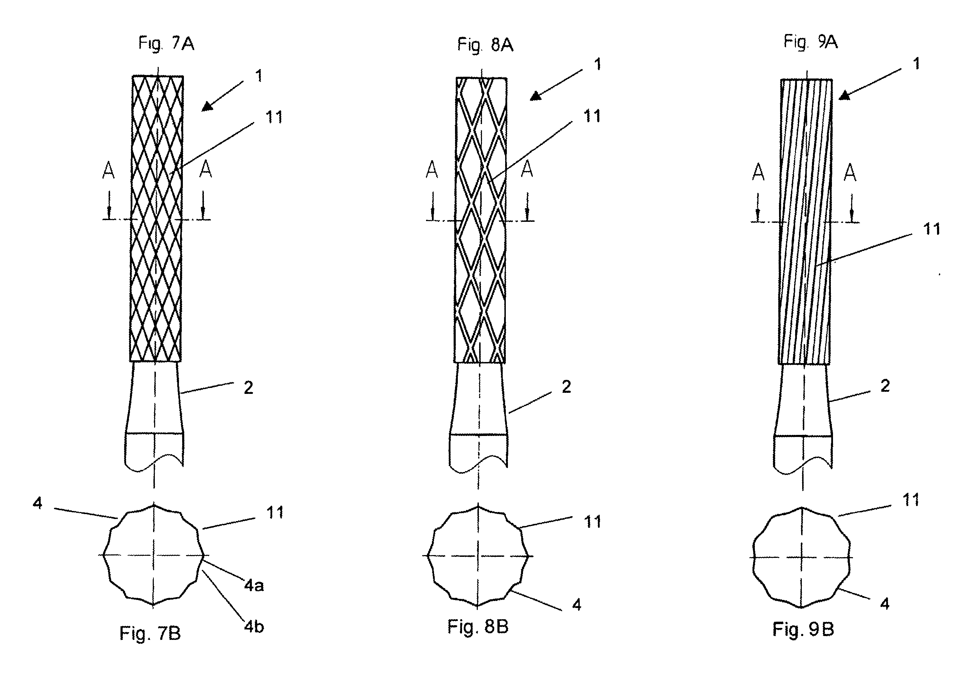

In den Fig. 6A und 6B ist ein Ausführungsbeispiel eines Dentalwerkzeuges 1 dargestellt. Dieses Dentalwerkzeug 1 unterscheidet sich von den in den vorhergehenden Ausführungsbeispielen dargestellten Dentalwerkzeuge 1 im wesentlichen dadurch, dass die Kanten 11, welche die erhabenen Bereiche bilden, nicht durchgehend über die gesamte Höhe des Schleifkopfes 2 angeordnet sind. Vielmehr besteht der Schleifkopf 2 aus mehreren Abschnitten 2a - 2d, die in Längsrichtung des Schleifkopfes 2 hintereinanderliegend angeordnet sind. Im Ausführungsbeispiel sind 4 Abschnitte 2a - 2d dargestellt, es können aber auch mehr oder weniger sein. Jeder dieser Abschnitte 2a - 2d weist, wie sich insbesondere aus Fig. 6A ergibt, mehrere Kanten 11 auf, die im Ausführungsbeispiel parallel zur Längsrichtung des Dentalwerkzeuges 1 verlaufen, aber auch unter einem Winkel zur Längsrichtung angeordnet sein können. Vor jeder Kante 11 ist eine ebene Fläche 19 und hinter jeder Kante 11 ein gewölbter Bereich 13 vorgesehen, so dass sich der in Fig. 6B gezeigte Querschnitt ergibt. Eine weitere Besonderheit gegenüber den Dentalwerkzeugen 1 nach den Ausführungen der Fig. 1a - 5b besteht darin, dass bei dieser Ausgestaltung die Kanten 11 des einen Abschnitts 2a gegenüber den Kanten 11 des folgenden Abschnitt 2b versetzt zueinander angeordnet sind. Dabei kann der Versatz so gewählt werden, dass jeweils die Kanten 11 aller ungeraden Abschnitte, d. h. im vorliegenden Ausführungsbeispiel des 1. und des 3. Abschnitts 2a und 2c, bzw. jeweils die Kanten 11 aller geraden Abschnitte, d. h. im vorliegenden Ausführungsbeispiel des 2. und des 4. Abschnitts 2b und 2d, im wesentlichen miteinander übereinstimmen.

Die Fig. 7A - 8B zeigen ein viertes und ein fünftes Ausführungsbeispiel des erfindungsgemäßen Dentalwerkzeuges 1. Beide Ausführungsbeispiele sind ähnlich, sie unterscheiden sich lediglich in der Anzahl der vorgesehenen Kanten 11. Diese ist beim Ausführungsbeispiel nach den Fig. 7A und 7B größer als beim Ausführungsbeispiel nach den Fig. 8A und 8B. Gemeinsam ist beiden Ausführungen, dass mindestens zwei Kanten 11 vorgesehen sind, die in entgegengesetzten Richtungen spiralförmig um den Schleifkopf 2 umlaufen und sich dabei schneiden, so dass sich das aus den Fig. 7A und 8A ersichtliche Rautenmuster ergibt. Weiterhin ist bei diesen Dentalwerkzeugen 1 die der Kante 11 voreilende Fläche 4 aus zwei Abschnitten 4a, 4b zusammengesetzt, die sich unter einem stumpfen Winkel schneiden. Dadurch ergeben sich zwischen jeweils zwei Kanten 11 Taschen, die nicht am zu behandelnden Zahn anliegen und die somit für die erfindungsgemäß gewünschte geringe Anlagefläche des Dentalwerkzeuges 1 sorgen.

Eine Ausführungsform ist in den Fig. 9A und 9B dargestellt. Hier sind die Kanten 11, welche die erhabenen Bereiche bilden, abgerundet. Weiterhin sind die der abgerundeten Kante 11 voreilenden Flächen 4 mit einer konkaven Wölbung versehen, so dass sich - im Querschnitt gesehen - ein symmetrischer wellenförmiger Verlauf von vorstehenden Kanten 11 und konkaven Wölbungen ergibt. Bei dieser Ausführungsform ist es unerheblich, ob die Kanten 11 - wie dargestellt - unter einem Winkel zur Längsachse des Dentalwerkzeuges 1 verlaufen oder parallel zu dieser angeordnet sind.

Obgleich in keinem der vorstehenden Ausführungsbeispiele des erfindungsgemäßen Dentalwerkzeuges 1 dargestellt, sind die Schleifköpfe 2 der verschiedenen Ausführungsbeispiele für eine bessere Schleifwirkung mit Diamant-Körnern galvanisch belegt Hierbei können die Diamant-Körner sowohl gleiche als auch unterschiedliche Korngrößen aufweisen. Die bevorzugte Körnung bewegt sich zwischen 100 und 180µm, wobei ein Korngrößenspektrum zwischen 5 und 250µm auch einsetzbar ist.

Schließlich ist noch anzumerken, dass insbesondere bei den Ausführungsbeispielen 4 und 5, im Gegensatz zu herkömmlichen kegelförmigen Schleifinstrumenten, die Außenoberfläche vergrößert ist, so dass im Vergleich zu den herkömmlichen kegelförmigen Schleifinstrumenten eine größere Anzahl an Diamant-Körnern aufbringbar ist. Dies führt zu einer weiteren Verbesserung der Effizienz bzw. Abtragleistung des erfindungsgemäßen Dentalwerkzeuges 1. Die Folge ist eine weitere Verkürzung der Vorpräparationszeit. Dies bedingt wiederum eine Patienten schonendere Behandlung durch den Zahnarzt.

Abschließend wird noch darauf hingewiesen, dass die in den Fig. 1A bis 9B dargestellten geometrischen und konstruktiven Merkmale als Teil der Beschreibung anzusehen sind.

## Patentansprüche

1. Dentalschleifwerkzeug (1), zum Schleifen von Zähnen:
- mit einem Schleifkopf (2); und
- mit einem rotierend antreibbaren Schaft (3); wobei
- der Schleifkopf (2) auf seiner Oberfläche zumindest einen erhabenen Bereich (11) aufweist, der pro Umdrehung des Schleifkopfes (2) eine zu präparierende Oberfläche bearbeitet, einen Flugkreis definiert und als Kante ausgebildet ist;
wobei
- die Kante (11) die Seitenlinie einer ebenen Fläche (4-10) ist und zumindest an der voreilenden Seite dieser Fläche (4-10) angeordnet ist, wobei die Fläche (4-10) gegenüber dem durch die Kante (11) definierten Flugkreis zurückversetzt ist;
- auf der Oberfläche des Schleifkopfes (2) Diamant-Körnern plaziert sind; und
- sich zwei ebene Flächen (4-10) direckt aneinander anschließen.

2. Dentalwerkzeug nach Anspruch 1, **dadurch gekennzeichnet, dass** der Schleif kopf (2) im Wesentlichen kegelförmig, zylindrisch oder flammenförmig ist.

3. Dentalwerkzeug nach einem der Ansprüche 1 oder 2, **dadurch gekennzeichnet, dass** die Fläche (4) aus zwei Abschnitten (4a, 4b) besteht, die sich unter einem stumpfen Winkel schneiden.

4. Dentalwerkzeug nach einem der Ansprüche 3, bis **dadurch gekennzeichnet, dass** die Kante (11) über die Höhe des Schleifkopfes (2) gewindeförmig ausgebildet ist.

5. Dentalwerkzeug nach Anspruch 1, **dadurch gekennzeichnet, dass** die Kanten (11) parallel zur Längsachse des Schleifkopfes (2) verlaufen.

6. Dentalwerkzeug nach einem der Ansprüche 1 bis 5, **dadurch gekennzeichnet, dass** die Diamant-Körner gleiche Korngröße aufweisen.

7. Dentalwerkzeug nach einem der Ansprüche 1 bis 5, **dadurch gekennzeichnet, dass** die Diamant-Körner unterschiedliche Korngrößen aufweisen.

8. Dentalwerkzeug nach einem der Ansprüche 1 bis 7, **dadurch gekennzeichnet, dass** die Korngröße der Diamant-Körner zwischen 5 bis 250µm, vorzugsweise zwischen 100 bis 180µm beträgt.

## Claims

1. Dental polishing tool (1) for polishing teeth:
- having a polishing head (2); and
- having a rotatably drivable shaft (3); wherein
- the polishing head (2) has on its surface at least one elevated region (11) which in every revolution of the polishing head (2) works on a surface to be prepared, defines a circular flight path and is constructed in the form of an edge;
wherein
- the edge (11) is the lateral line of a level surface (4-10) and is arranged at least on the leading edge of this surface (4-10), wherein the surface (4-10) is set back with respect to the circular flight path defined by the edge (11);
- diamond particles are placed on the surface of the polishing head (2); and
- two level surfaces (4-10) directly adjoin one another.

2. Dental tool according to claim 1, **characterised in that** the polishing head (2) is substantially conical, cylindrical or flame-like.

3. Dental tool according to one of claims 1 or 2, **characterised in that** the surface (4) consists of two sections (4a, 4b) which intersect at an obtuse angle.

4. Dental tool according to any of claims 1 to 3, **characterised in that** the edge (11) is constructed in the shape of a screw thread above the height of the polishing head (2).

5. Dental tool according to claim 1, **characterised in that** the edges (11) run parallel to the longitudinal axis of the polishing head (2).

6. Dental tool according to any of claims 1 to 5, **characterised in that** the diamond particles have the same particle size.

7. Dental tool according to any of claims 1 to 5, **characterised in that** the diamond particles have different particle sizes.

8. Dental tool according to any of claims 1 to 7, **characterised in that** the particle size of the diamond particles is between 5 to 250 µm, preferably between 100 to 180 µm.

## Revendications

1. Outil dentaire (1) pour meuler des dents, qui comporte une tête de meulage (2) et une tige (3) qui peut être entraînée en rotation, dans lequel
- la tête de meulage (2) présente sur sa surface une zone en saillie (11) qui, quand la tête de meulage tourne, usine une surface à préparer, définit un cercle de coupe et est constituée par une arête,
- l'arête (11) constitue la ligne latérale d'une surface (4 à 10) et se trouve au moins sur le côté en avant de cette surface qui est décalée en arrière par rapport au cercle de coupe défini par l'arête (11),
- sur la surface de la tête de meulage (2) sont placés des grains de diamant,
- les deux surfaces planes (4, 10) sont raccordées directement entre elles.

2. Outil dentaire selon la revendication 1, **caractérisé en ce que** la tête de meulage (2) a essentiellement la forme d'un cône, d'un cylindre ou d'une flamme.

3. Outil dentaire selon la revendication 1 ou 2, **caractérisé en ce que** la surface (4) est composée de deux parties (4a, 4b) qui se coupent selon un angle obtus.

4. Outil dentaire selon une des revendications 1 à 3, **caractérisé en ce que** l'arête (11) s'étend sur la hauteur de la tête de coupe et présente la forme d'un filet hélicoïdal.

5. Outil dentaire selon la revendication 1, **caractérisé en ce que** les arêtes (11) sont parallèles à l'axe longitudinal de la tête de meulage (2).

6. Outil dentaire selon une des revendications 1 à 5, **caractérisé en ce que** les grains de diamant ont la même grosseur.

7. Outil dentaire selon une des revendications 1 à 5, **caractérisé en ce que** les grains de diamant ont des grosseurs différentes.

8. Outil dentaire selon une des revendications 1 à 7, **caractérisé en ce que** les grains de diamant ont une grandeur comprise entre 5 et 250 microns, de préférence entre 100 et 180 microns.
